# EUROPEAN PATENT APPLICATION

(11) **EP 4 773 729 A1**
(43) Date of publication of application: **08.07.2026**
(21) Application number: 24883946.6
(22) Date of filing: 18.06.2024
(51) Int. Cl.: H04W 88/08

(54) **DATA TRANSMISSION METHOD, ACCESS NETWORK, APPARATUS AND STORAGE MEDIUM**

(30) Priority: 02.11.2023 CN 202311452468
(71) Applicant: ZTE Corporation, Shenzhen, Guangdong 518057 (CN)
(72) Inventor: DAI, Bo, Shenzhen, Guangdong 518057 (CN); HU, Liujun, Shenzhen, Guangdong 518057 (CN); YU, Guanghui, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099958
(87) International publication number: WO 2025/091935

(57) **Abstract**

Provided in the present disclosure are a data transmission method, an access network, an apparatus and a storage medium. The access network at least comprises a control plane and a user plane, wherein the control plane is used for at least one of the following: managing network-level functions, managing network-level data, managing network-level tasks, transmitting control information related to the network-level tasks, transmitting control information related to the network-level data, transmitting the network-level data, transmitting control information and/or data related to terminal devices, transmitting data unrelated to the terminal devices, transmitting control information of the data unrelated to the terminal devices, and transmitting control information of tasks unrelated to the terminal devices; and the user plane is used for at least one of the following: transmitting the data related to the terminal devices, transmitting the data unrelated to the terminal devices, and transmitting the network-level data.

## Description

The present disclosure claims priority to Chinese Patent Application No. 202311452468.X, filed on November 2, 2023, which is hereby incorporated by reference in its entirety.

### TECHNICAL FIELD

The present disclosure relates to the technical field of communications, and in particular, to a data transmission method, an access network, an apparatus and a storage medium.

### BACKGROUND

Mobile communication follows the development pattern of one generation of technology every ten years, and has gone through the development of the first generation mobile communication technology (1G), 2G, 3G, 4G and 5G. Every generational leap and every technological advancement has greatly promoted industrial upgrading and economic and social development. From the 1G to 2G, the transition from analog to digital communication is realized, and mobile communication enters every household. From the 2G to 3G, 4G and 5G, the transition from voice services to data services is realized, with transmission speeds increasing hundreds of times, promoting the popularization and prosperity of mobile Internet applications. With the rapid development of the mobile Internet, new services, new businesses, new technologies, and new devices are constantly emerging. 5G mobile communication systems are hard to meet the needs of flexible and diverse businesses in the future, and there is an urgent need to develop a next generation of mobile communication technology, i.e., a sixth generation mobile communication technology (6G).

### SUMMARY

In a first aspect, an access network is provided. The access network includes at least a control plane and a user plane. The control plane is used for at least one of the following: managing network-level functions, managing network-level data, managing network-level tasks, transmitting control information related to the network-level tasks, transmitting control information related to the network-level data, transmitting the network-level data, transmitting control information and/or data related to terminal devices, transmitting data unrelated to the terminal devices, transmitting control information for the data unrelated to the terminal devices, or transmitting control information for tasks unrelated to the terminal devices. The user plane is used for at least one of the following: transmitting the data related to the terminal devices, transmitting the data unrelated to the terminal devices, or transmitting the network-level data.

In a second aspect, a data transmission method is provided, which is applied to the access network provided in the first aspect. The method includes:
transmitting data/control information related to network-level nodes with core network elements; and
transmitting the data/control information related to the network-level nodes with the network-level nodes.

In a third aspect, a data transmission apparatus is provided, which is applied to the access network provided in the first aspect. The apparatus includes:
a first transmission module configured to transmit data/control information related to network-level nodes with core network elements; and
a second transmission module configured to transmit the data/control information related to the network-level nodes with network-level nodes.

In a fourth aspect, a communication apparatus is provided, including a memory and a processor. The memory is coupled to the processor; the memory is configured to store computer program instructions executable by the processor; and the processor, when executing the computer program instructions, implements the data transmission method in the above second aspect or any of the embodiments.

In a fifth aspect, a computer-readable storage medium is provided. The computer-readable storage medium has stored computer program instructions thereon. The computer program instructions, when executed by a computer (e.g., a communication apparatus or a signal transmission apparatus), implement the data transmission method in the above second aspect or any of the embodiments.

In a sixth aspect, a computer program product is provided. The computer program product includes computer program instructions. The computer program instructions, when being executed, implement the data transmission method in the above second aspect or any of the embodiments.

### BRIEF DESCRIPTION OF THE DRAWINGS

FIG. 1 is a schematic diagram of a 5G network architecture, in accordance with embodiments of the present disclosure.
FIG. 2 is a schematic diagram of a network architecture, in accordance with embodiments of the present disclosure.
FIG. 3 is a schematic diagram of another network architecture, in accordance with embodiments of the present disclosure.
FIG. 4 is a schematic diagram of yet another network architecture, in accordance with embodiments of the present disclosure.
FIG. 5 is a schematic diagram of yet another network architecture, in accordance with embodiments of the present disclosure.
FIG. 6 is a schematic diagram of yet another network architecture, in accordance with embodiments of the present disclosure.
FIG. 7 is a schematic diagram of yet another network architecture, in accordance with embodiments of the present disclosure.
FIG. 8 is a schematic diagram of yet another network architecture, in accordance with embodiments of the present disclosure.
FIG. 9 is a schematic diagram of yet another network architecture, in accordance with embodiments of the present disclosure.
FIG. 10 is a schematic diagram of yet another network architecture, in accordance with embodiments of the present disclosure.
FIG. 11 is a schematic diagram of yet another network architecture, in accordance with embodiments of the present disclosure.
FIG. 12 is a schematic diagram of yet another network architecture, in accordance with embodiments of the present disclosure.
FIG. 13 is a schematic diagram of yet another network architecture, in accordance with embodiments of the present disclosure.
FIG. 14 is a structural schematic diagram of a data transmission apparatus, in accordance with embodiments of the present disclosure.
FIG. 15 is a structural schematic diagram of a communication apparatus, in accordance with embodiments of the present disclosure.

### DETAILED DESCRIPTION

The technical solutions in embodiments of the present disclosure will be described clearly and completely with reference to the accompanying drawings in embodiments of the present disclosure. However, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent three cases: only A, only B, and both A and B. Additionally, "at least one" means one or more, and "multiple/plurality of" means two or more. The words such as "first", "second", etc., do not limit the number and execution order, and the words such as "first", "second", etc., do not necessarily limit different terms.

It should be noted that in the present disclosure, the words such as "exemplary (exemplarily)" or "for example (such as, e.g.)", etc., are used to represent examples, explanations, or illustrations. Any embodiment or design solution described with "exemplary (exemplarily)" or "for example (such as, e.g.)", etc., in the present disclosure should not be interpreted as being more preferred or advantageous than other embodiments or design solutions. Specifically, the use of the words such as "exemplary (exemplarily)" or "for example (such as, e.g.)", etc., is intended to present related concepts in some manners.

Core network (CN) is one of three major components of a communication network. The core network is a "management center" of the communication network, and is mainly responsible for managing data, sorting data, determining the destination of data, and performing core functions such as routing, forwarding, and signaling transmission.

Radio access network (RAN) is a part of a mobile communication system, and is an implementation of radio access technology. It exists between a device (e.g., a mobile phone, a computer, or any remotely controlled machine) and the core network, providing a communication connection between the device and the core network.

Service-based architecture (SBA) is an important feature of 5G mobile communication systems. Combining the network characteristics and technological development trends of the mobile core network, network functions are divided into several reusable "services", and the "services" communicate using lightweight interfaces. The goal is to achieve high efficient, software-based, and open 5G systems. To adapt to the development of 5G networks, RAN proposed a distributed architecture base station based on centralized units (CUs) and distributed units (DUs).

The CU mainly includes non-real-time wireless higher-layer protocol stack functions, and also supports the deployment of some core network functions and the deployment of edge application services; and the DU mainly handles physical layer functions and Layer 2 functions that require real-time processing. In other words, the separation of CU and DU is based on the real-time nature of the processing content.

Then, under the CU-DU architecture, the CU is further split into a control panel (CP) and a user panel (UP), i.e., split into a centralized unit control panel (CU-CP) and a centralized unit user panel (CU-UP), supporting the connection of multiple CU-UPs and a single CU-CP. Regarding the transmission content, the user plane is used for transmitting user data, and the control plane is used for transmitting control plane signaling.

The control plane protocol stack includes radio resource control (RRC), packet data convergence protocol (PDCP), radio link control (RLC), medium access control (MAC), and physical layer (PHY). The user plane protocol stack includes service data adaptation protocol (SDAP), PDCP, RLC, MAC, and PHY. Existing communications require UE participation, and the network architectures and protocol stacks are also designed for interconnection between UEs.

The 5G access network includes Node-B nodes, which support centralized unit (CU) and DU separation deployment. For the scenario of splitting Node-B, RRC, PDCP, and SDAP are arranged in the CU, and other protocol stacks are arranged in the DU.

The next generation (NG) interface is an interface between the NG-RAN and the core network, and is used for transmitting control information and user data between the NG-RAN and the core network. The NG interface is divided into a control plane and a user plane. The functional nodes of the 5G core network include access and mobility management function (AMF), session management function (SMF), user plane function (UPF), network repository function (NRF), network exposure function (NEF), unified data management (UDM), etc. AMF, SMF, and UPF network elements are related to the access network.

AMF supports user terminals with different mobility management needs. The main tasks are: non-access stratum (NAS) signaling terminals, NAS signaling security, access stratum security control, inter-core network node signaling for mobility between 3GPP access networks, idle mode user terminal reachability (including paging and retransmission control and execution), registration area management, support for intra-system and inter-system mobility, access authentication, access authorization (including roaming permission checks), mobility management control (subscription and policies), support for network slicing, and SMF selection.

SMF can work with AMF to support customized mobility management schemes, such as "mobile initiated connection only (MICO)" or RAN enhancements, like "RRC inactive" status. The main tasks are: session management, allocation and management of user terminal Internet protocol (IP) addresses, selection and control of UPFs, configuration of flow control in UPFs to route traffic to appropriate destinations, policy enforcement and quality of service (QoS) control, and downlink data notification.

The main tasks performed by UPF are: anchor point for intra-system and inter-system movement, external packet data unit session (PDU) session point connecting to the data network, packet routing and forwarding, packet inspection and user plane policy rule enforcement, traffic usage reporting, uplink classifier (used for supporting routing service flows to the data network), branch point supporting multihomed PDU sessions, QoS processing for the user plane (e.g., packet filtering, gating, uplink and downlink rate enforcement), uplink service verification (service data flow (SDF) to QoS flow mapping), downlink packet buffering, and downlink data notification triggering.

NRF provides support for network function (NF) service management, including registration, deregistration, authorization, and discovery.

NEF is used for providing external exposure of network functional capabilities. The external exposure may be categorized into monitoring capabilities, provisioning capabilities, application impact of traffic routing, and policy/billing capabilities.

UDM supports a data storage architecture for compute and storage separation in the 5G core network (5G core (5GC)). The unified data repository (UDR) is the main database. Unstructured data storage function (UDSF) is introduced to store dynamic data.

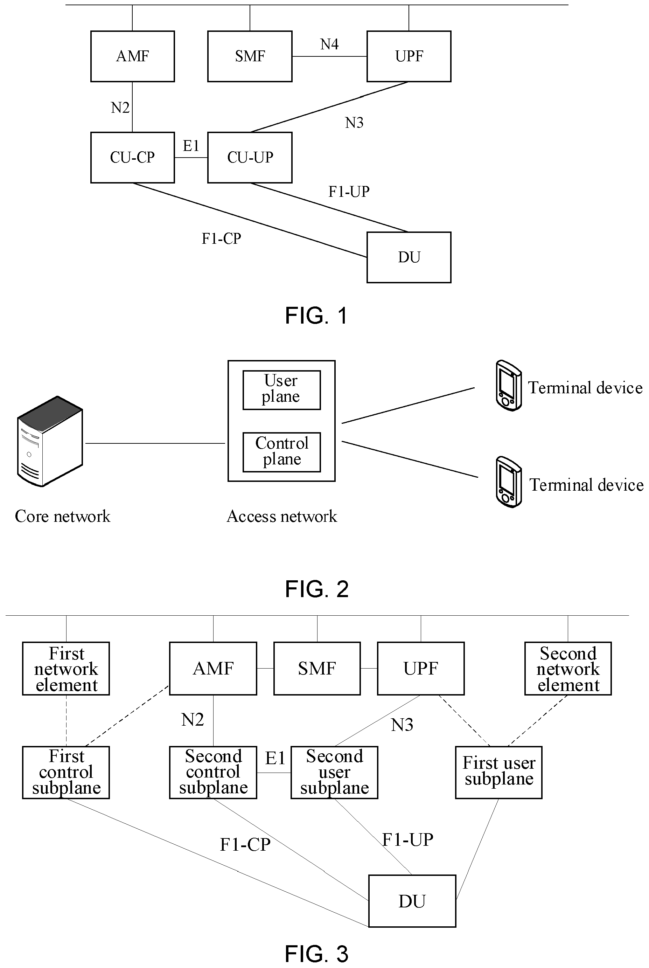

For example, FIG. 1 shows a 5G network architecture. As shown in FIG. 1, the centralized unit control plane (CU-CP) in the RAN is connected to the functional node AMF of the 5G core network through an N2 interface and connected to the DU through an F1-CP interface, and is used for transmitting control plane signaling. The centralized unit user plane (CU-UP) is connected to the functional node UPF of the 5G core network through an N3 interface and connected to the DU through an F1-UP interface, and is used for transmitting user data. The CU-CP and the CU-UP are connected through an E1 interface, enabling efficient transmission of data and signaling between the user plane and the control plane. The functional node SMF of the core network and the functional node UPF node of the core network are connected through an N4 interface, to enable functions such as user session management, user data transmission, and policy control.

The terminal device is a device with a wireless transceiver function, and may be deployed on land, including indoor or outdoor environments, in forms such as handheld, wearable or in-vehicle; or the terminal device may be deployed on water (e.g., on a steamship); or the terminal device may be deployed in the air (e.g., on an airplane, on a balloon, or on a satellite). The user terminal may be a mobile phone, a pad, a computer with a wireless transceiver function, a virtual reality (VR) terminal, an augmented reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The user terminal may also be referred to as a terminal, an access terminal, a user equipment (UE) unit, a UE station, a mobile station, a mobile platform, a remote station, a remote terminal, a mobile device, a UE terminal, a wireless communication device, a UE agent, a UE apparatus, etc.

The base stations may be base stations in long term evolution (LTE), long term evolution advanced (LTEA), or evolutionary Node B (eNB or eNodeB), base station devices in 5G networks, or base stations in future communication systems. The base stations may include various macro base stations, micro base stations, home base stations, radio remotes, reconfigurable intelligent surfaces (RISs), routers, relays, transmit-receive processors (TRPs), wireless fidelity (WIFI) devices, and other network-side devices.

6G is a conceptual wireless network mobile communication technology. Regarding the design of 6G systems, it is currently in the candidate technology solicitation stage, and there is no detailed design plan for 6G systems. 6G will support new services such as sensing, intelligence, and computing power. As a brand new system, how to design better ways to achieve the reuse of multiple new services and the reuse between new and old services under this system needs to be studied and solved.

Existing 5G network services are all related to terminal devices, such as voice, video, image, and text. With the evolution of standards and the development of technology, more and more research on the vision, requirements, and key technologies of 6G is being published. 6G communication systems will introduce one or more of the following functions: intelligence, computing power, security, wireless network quality evaluation (e.g., quality of service (QoS) and quality of experience (QoE)), endogenous data management (data exchanged between the wireless access network and the core network that does not require terminal participation, such as intelligence-related information and sensing information), sensing, power supply, or computing power. The computing power, external intelligence (e.g., the network provides intelligence externally), and one-way sensing (e.g., some sensing scenarios only require network-level nodes to perform sensing and do not need the participation of terminal devices) do not require the participation of terminal devices. Therefore, when the network evolves to 6G, how to design the 6G network to ensure the efficient coexistence of services related to and unrelated to terminal devices is a problem that urgently needs to be solved. In view of this, embodiments of the present disclosure provide an access network and a communication system, which can be used in 6G networks and future evolved networks.

In light of this, the present disclosure provides an access network. The access network includes at least a control plane and a user plane. The control plane is used for at least one of: managing network-level functions, managing network-level data, managing network-level tasks, transmitting control information related to the network-level tasks, transmitting control information related to the network-level data, transmitting the network-level data, transmitting control information and/or data related to terminal devices, transmitting data unrelated to the terminal devices, transmitting control information for the data unrelated to the terminal devices, or transmitting control information for tasks unrelated to the terminal devices. The user plane is used for at least one of: transmitting the data related to the terminal devices, transmitting the data unrelated to the terminal devices, or transmitting the network-level data.

In this way, compared with the existing access network, the user plane and the control plane can manage or transmit functions or data related to the terminal devices and can also manage or transmit functions or data unrelated to the terminal devices, thereby enabling the efficient coexistence of services unrelated to and related to terminal devices in the communication system, and ensuring the efficient coexistence of network-level and terminal-level services. Such an access network may be well suited to the future communication systems.

Next, the access network provided in the embodiments of the present disclosure will be introduced with reference to the drawings.

In some embodiments, as shown in FIG. 2, the access network includes at least a control plane and a user plane. The control plane is used for at least one of: managing network-level functions, managing network-level data, managing network-level tasks, transmitting control information related to the network-level tasks, transmitting control information related to the network-level data, transmitting the network-level data, transmitting control information and/or data related to terminal devices, transmitting data unrelated to the terminal devices, transmitting control information for the data unrelated to the terminal devices, or transmitting control information for tasks unrelated to the terminal devices. The user plane is used for at least one of: transmitting the data related to the terminal devices, transmitting the data unrelated to the terminal devices, or transmitting the network-level data.

Referring to FIG. 2, the access network is connected to a core network. The core network includes core network elements such as AMF, SMF, and UPF. The core network further includes core network elements in future communication systems, such as core network elements in 6G and beyond communication systems, which may be network elements related to network-level data and/or tasks, such as network elements related to AI, network elements related to computing power, network elements related to sensing, and network elements related to network data collection or management. The access network is connected to a plurality of terminal devices. This embodiment does not limit the number of terminal devices. The access network may also have other names, such as radio access network or access network.

The network-level functions, network-level data, network-level tasks, tasks unrelated to the terminal devices, functions unrelated to the terminal devices, and data unrelated to the terminal devices may refer to: data/functions/tasks related to artificial intelligence (Al), data/functions/tasks related to computing power, data/functions/tasks related to sensing, and data/functions/tasks related to network data collection or management.

The managing network-level functions may be understood as managing functions between network-level nodes and the core network that are unrelated to the terminal devices. The functions between the network-level nodes and the core network that are unrelated to the terminal devices may be intelligent functions that do not require the participation of the terminal devices, such as computing power, external intelligence (e.g., the network provides intelligence externally), one-way sensing (e.g., some sensing scenarios only require network-level nodes to perform sensing and do not need the participation of terminal devices), etc.

The network-level nodes include base stations, relays, TRPs, DUs, CUs, CU-CPs, and CU-UPs, and further includes control subplanes, user subplanes, a management plane, a data plane, etc. mentioned below.

In some embodiments, the access network includes at least a control plane and a user plane. The control plane includes a plurality of control subplanes, and/or the user plane includes a plurality of user subplanes.

For example, as shown in FIG. 3, the access network includes a user plane and a control plane. The control plane includes a first control subplane and a second control subplane. The first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices. The second control subplane is used for at least transmitting the control information and/or data related to the terminal devices.

The first control subplane may also have other names, such as inner control plane (CU-NCP or NCP). The second control subplane may also have other names, such as outer control plane (CU-OCP or OCP).

The user plane includes a first user subplane and a second user subplane. The first user subplane is used for at least transmitting the data unrelated to the terminal devices and/or transmitting the network-level data. The second user subplane is used for at least transmitting the data related to the terminal devices.

The first user subplane may also have other names, such as inner user plane (CU-NUP or NUP). The second user subplane may also have other names, such as outer user plane (CU-OUP or OUP).

The first control subplane is connected to the access and mobility management function (AMF) and/or a first network element. The second control subplane is connected to the AMF. The first user subplane is connected to the user plane function (UPF) and/or a second network element. The second user subplane is connected to the UPF.

The first network element and the second network element are core network elements in the future communication systems. The future communication systems include 6G and beyond communication systems. The first network element and the second network element may be network elements related to the network-level data and/or tasks, such as network elements related to AI, network elements related to computing power, network elements related to sensing, and network elements related to network data collection or management. The first network element and the second network element may be the same, or may be different.

In some embodiments, the control plane includes a plurality of control subplanes, and the user plane is used for transmitting the data related to the terminal devices.

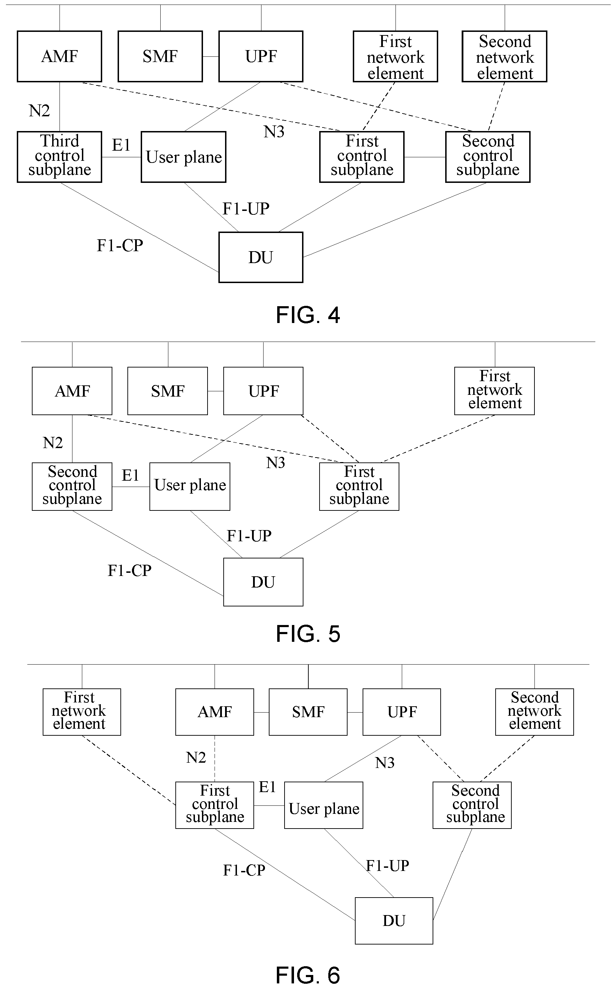

For example, as shown in FIG. 4, the access network includes a user plane and a control plane. The user plane is used for transmitting the data related to the terminal devices. The control plane includes at least one of a first control subplane, a second control subplane, or a third control subplane.

The first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices. The second control subplane is used for transmitting the data unrelated to the terminal devices and/or transmitting the network-level data. The third control subplane is used for at least transmitting the control information and/or data related to the terminal devices.

The first control subplane may also have other names, such as management subplane (CU-govern plane (CU-GP)). The second control subplane may also have other names, such as data subplane (CU-data plane (CU-DP)). The third control subplane may also have other names, such as control subplane (CU-CP).

The user plane is connected to the UPF. The first control subplane is connected to the AMF and/or a first network element. The second control subplane is connected to the UPF and/or a second network element. The third control subplane is connected to the AMF. The first network element and the second network element are core network elements in the future communication systems. The future communication systems include 6G and beyond communication systems. The first network element and the second network element may be network elements related to the network-level data and/or tasks, such as network elements related to AI, network elements related to computing power, network elements related to sensing, and network elements related to network data collection or management. The first network element and the second network element may be the same, or may be different.

As another example, as shown in FIG. 5, the access network includes a user plane and a control plane. The user plane is used for transmitting the data related to the terminal devices. The control plane includes a first control subplane and a second control subplane.

The first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices, and is used for transmitting the data unrelated to the terminal devices or transmitting the network-level data. The second control subplane is used for at least transmitting the control information and/or data related to the terminal devices.

The first control subplane may also have other names, such as inner control plane (CU-NCP). The second control subplane may also have other names, such as outer control plane (CU-OCP).

The user plane is connected to the UPF. The first control subplane is connected to at least one network element among the AMF, a first network element, and the UPF. The second control subplane is connected to the AMF. The first network element is a core network element in the future communication systems. The future communication systems include 6G and beyond communication systems. The first network element may be a network element related to the network-level data or tasks, such as a network element related to AI, a network element related to computing power, a network element related to sensing, or a network element related to network data collection or management.

As another example, as shown in FIG. 6, the access network includes a user plane and a control plane. The user plane is used for transmitting the data related to the terminal devices. The control plane includes a first control subplane and a second control subplane.

The first control subplane is used for transmitting the control information and/or data related to the terminal devices, and is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, or transmitting the control information and/or data related to the terminal devices. The second control subplane is used for at least transmitting the data unrelated to the terminal devices or transmitting the network-level data.

The first control subplane may also have other names, such as control subplane (CU-CP). The second control subplane may also have other names, such as data subplane (CU-DP).

The user plane is connected to the UPF. The first control subplane is connected to the AMF and/or a first network element. The second control subplane is connected to a second network element and/or the UPF. The first network element and the second network element are core network elements in the future communication systems. The future communication systems include 6G and beyond communication systems. The first network element and the second network element may be network elements related to the network-level data or tasks, such as network elements related to AI, network elements related to computing power, network elements related to sensing, and network elements related to network data collection or management. The first network element and the second network element may be the same, or may be different.

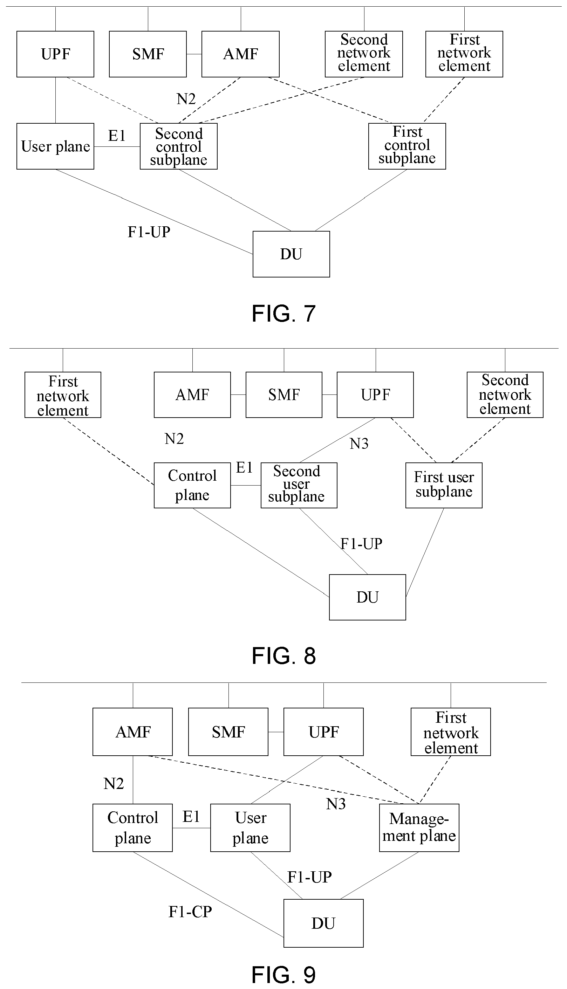

As another example, as shown in FIG. 7, the access network includes a user plane and a control plane. The user plane is used for transmitting the data related to the terminal devices. The control plane includes a first control subplane and a second control subplane.

The first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices. The second control subplane is used for at least transmitting the control information and/or data related to the terminal devices, and is used for transmitting the data unrelated to the terminal devices or transmitting the network-level data.

The first control subplane may also have other names, such as management subplane (CU-GP). The second control subplane may also have other names, such as control subplane (CU-CP).

The user plane is connected to the UPF. The first control subplane is connected to a first network element and/or the AMF. The second control subplane is connected to at least one network element among a second network element, the UPF, and the AMF. The first network element and the second network element are core network elements in the future communication systems. The future communication systems include 6G and beyond communication systems. The first network element and the second network element may be network elements related to the network-level data or tasks, such as network elements related to AI, network elements related to computing power, network elements related to sensing, and network elements related to network data collection or management. The first network element and the second network element may be the same, or may be different.

In some embodiments, the user plane includes a plurality of user subplanes, and the control plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, or transmitting the control information and/or data related to the terminal devices.

For example, as shown in FIG. 8, the access network includes a user plane and a control plane. The user plane includes a first user subplane and a second user subplane. The first user subplane is used for transmitting the data unrelated to the terminal devices or transmitting the network-level data. The second user subplane is used for transmitting the data related to the terminal devices.

The first user subplane may also have other names, such as inner user plane (CU-NUP or NUP). The second user subplane may also have other names, such as outer user plane (CU-OUP or OUP).

The control plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, or transmitting the control information and/or data related to the terminal devices.

The control plane is connected to a first network element and/or the AMF. The first user subplane is connected to the UPF and/or a second network element. The second user subplane is connected to the UPF. The first network element and the second network element are core network elements in the future communication systems. The future communication systems include 6G and beyond communication systems. The first network element and the second network element may be network elements related to the network-level data or tasks, such as network elements related to AI, network elements related to computing power, network elements related to sensing, and network elements related to network data collection or management. The first network element and the second network element may be the same, or may be different.

In some embodiments, the access network includes a user plane, a control plane, and a management plane. The management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, transmitting the data unrelated to the terminal devices, or transmitting the network-level data.

For example, as shown in FIG. 9, the access network includes a user plane, a control plane, and a management plane.

The management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, transmitting the data unrelated to the terminal devices, or transmitting the network-level data.

The user plane is used for transmitting the data related to the terminal devices.

The control plane is used for transmitting the control information and/or data related to the terminal devices.

The user plane is connected to the UPF. The control plane is connected to the AMF. The management plane is connected to at least one network element among the AMF, a first network element, and the UPF. The first network element is a core network element in the future communication systems. The future communication systems include 6G and beyond communication systems. The first network element may be a network element related to the network-level data or tasks, such as a network element related to AI, a network element related to computing power, a network element related to sensing, or a network element related to network data collection or management.

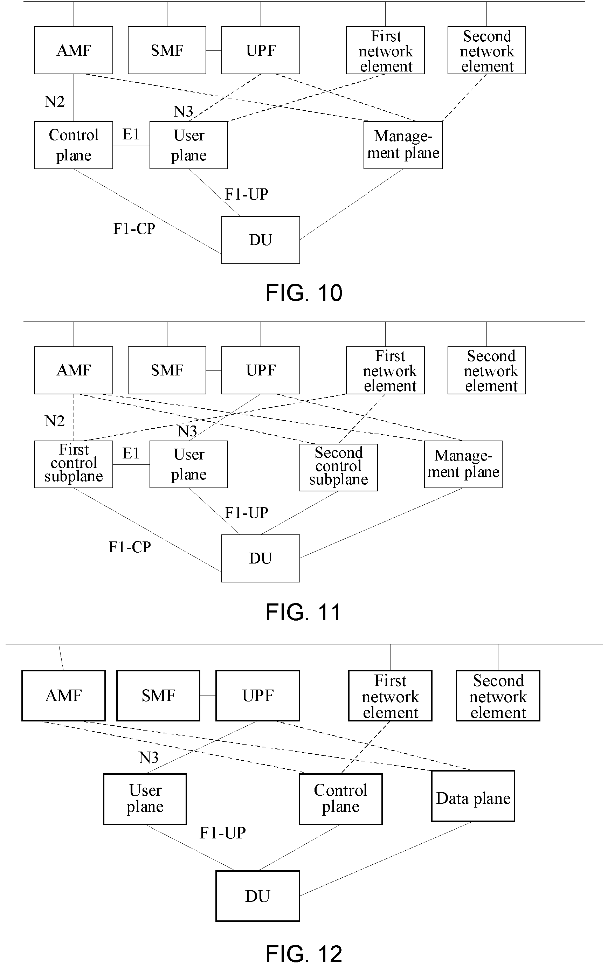

As another example, as shown in FIG. 10, the access network includes a user plane, a control plane, and a management plane.

The management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices.

The user plane is used for transmitting the data related to the terminal devices, and is used for transmitting the data unrelated to the terminal devices or transmitting the network-level data.

The control plane is used for transmitting the control information and/or data related to the terminal devices.

The user plane is connected to the UPF and/or a first network element. The control plane is connected to the AMF. The management plane is connected to at least one network element among the AMF, a second network element, and the UPF. The first network element and the second network element are core network elements in the future communication systems. The future communication systems include 6G and beyond communication systems. The first network element and the second network element may be network elements related to the network-level data or tasks, such as network elements related to AI, network elements related to computing power, network elements related to sensing, and network elements related to network data collection or management. The first network element and the second network element may be the same, or may be different.

As another example, as shown in FIG. 11, the access network includes a user plane, a control plane, and a management plane.

The management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices.

The user plane is used for transmitting the data related to the terminal devices.

The control plane is used for transmitting the control information and/or data related to the terminal devices, and is used for transmitting the data unrelated to the terminal devices or transmitting the network-level data.

The control plane includes a first control subplane and a second control subplane. The first control subplane is used for transmitting the control information and/or data related to the terminal devices, and the second control subplane is used for transmitting the data unrelated to the terminal devices or transmitting the network-level data. The first control subplane may also have other names, such as control subplane. The second control subplane may also have other names, such as data subplane.

The user plane is connected to the UPF. The control plane is connected to the AMF and/or a first network element. That is, the first control subplane may be connected to the AMF and/or the first network element, and the second control subplane may be connected to the AMF and/or the first network element. The management plane is connected to at least one network element among the AMF, a second network element, and the UPF. The first network element and the second network element are core network elements in the future communication systems. The future communication systems include 6G and beyond communication systems. The first network element and the second network element may be network elements related to the network-level data and/or tasks, such as network elements related to AI, network elements related to computing power, network elements related to sensing, and network elements related to network data collection or management. The first network element and the second network element may be the same, or may be different.

In some embodiments, the access network includes a user plane, a control plane, and a management plane. The management plane is used for at least one of: managing the network-level functions, managing the network-level data, managing the network-level tasks, transmitting the control information related to the network-level tasks, transmitting the control information related to the network-level data, transmitting the network-level data, transmitting the control information and/or data related to the terminal devices, transmitting the data unrelated to the terminal devices, transmitting the control information for the data unrelated to the terminal devices, or transmitting the control information for the tasks unrelated to the terminal devices. The user plane is used for transmitting the data related to the terminal devices. The control plane is used for transmitting the control information and/or data related to the terminal devices.

The management plane includes a first management subplane and a second management subplane. The first management subplane is used for: managing the network-level functions, managing the network-level data, managing the network-level tasks, transmitting the control information related to the network-level tasks, transmitting the control information related to the network-level data, transmitting the network-level data, transmitting the data unrelated to the terminal devices, transmitting the control information for the data unrelated to the terminal devices, or transmitting the control information for the tasks unrelated to the terminal devices. The second management subplane is used for transmitting the control information and/or data related to the terminal devices.

The user plane is connected to the UPF. The control plane is connected to the AMF and/or a first network element. The management plane is connected to at least one network element among the AMF, a second network element, and the UPF. The first network element and the second network element are core network elements in the future communication systems. The future communication systems include 6G and beyond communication systems. The first network element and the second network element may be network elements related to the network-level data and/or tasks, such as network elements related to AI, network elements related to computing power, network elements related to sensing, and network elements related to network data collection or management. The first network element and the second network element may be the same, or may be different.

In some embodiments, the access network includes a user plane, a control plane, and a management plane. The management plane is used for at least one of: transmitting control information for intelligent tasks, transmitting data for the intelligent tasks, transmitting control information for sensing tasks, transmitting data for the sensing tasks, transmitting control information for computing power tasks, transmitting data for the computing power tasks, transmitting control information for positioning tasks, or transmitting data for the positioning tasks. The user plane is used for transmitting the data related to the terminal devices. The control plane is used for transmitting the control information related to the terminal devices.

The management plane includes a first management subplane and a second management subplane. The first management subplane is used for: transmitting tasks related to the terminal devices, which may include at least one of: transmitting control information for intelligent tasks related to the terminal devices, transmitting data for the intelligent tasks related to the terminal devices, transmitting control information for sensing tasks related to the terminal devices, transmitting data for the sensing tasks related to the terminal devices, transmitting control information for computing power tasks related to the terminal devices, transmitting data for the computing power tasks related to the terminal devices, transmitting control information for positioning tasks related to the terminal devices, or transmitting data for the positioning tasks related to the terminal devices. The second management subplane is used for transmitting network-level related tasks, which may include at least one of: transmitting control information for network-level intelligent tasks, transmitting data for the network-level intelligent tasks, transmitting control information for network-level sensing tasks, transmitting data for the network-level sensing tasks, transmitting control information for network-level computing power tasks, or transmitting data for the network-level computing power tasks.

The user plane is connected to the UPF. The control plane is connected to the AMF. The management plane is connected to at least one network element among the AMF, a second network element, and the UPF. A first network element and the second network element are core network elements in the future communication systems. The future communication systems include 6G and beyond communication systems. The first network element and the second network element may be network elements related to the network-level data and/or tasks, such as network elements related to AI, network elements related to computing power, network elements related to positioning, network elements related to sensing, or network elements related to network data collection or management. The first network element and the second network element may be the same, or may be different.

In some embodiments, the access network includes a data plane, a user plane, and a control plane. The data plane is used for transmitting the data unrelated to the terminal devices or transmitting the network-level data.

For example, as shown in FIG. 12, the access network includes a data plane, a user plane, and a control plane.

The data plane is used for transmitting the data unrelated to the terminal devices or transmitting the network-level data.

The user plane is used for transmitting the data related to the terminal devices.

The control plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for tasks unrelated to the terminal devices, and is used for transmitting control information and/or data related to the terminal devices.

The user plane is connected to the UPF. The control plane is connected to the AMF and/or a first network element. The data plane is connected to at least one network element among the AMF, a second network element, and the UPF. The first network element and the second network element are core network elements in the future communication systems. The future communication systems include 6G and beyond communication systems. The first network element and the second network element may be network elements related to the network-level data and/or tasks, such as network elements related to AI, network elements related to computing power, network elements related to sensing, and network elements related to network data collection or management. The first network element and the second network element may be the same, or may be different.

In some embodiments, the access network includes a data plane, a user plane, a control plane, and a management plane. The data plane is used for transmitting the data unrelated to the terminal devices or transmitting the network-level data.

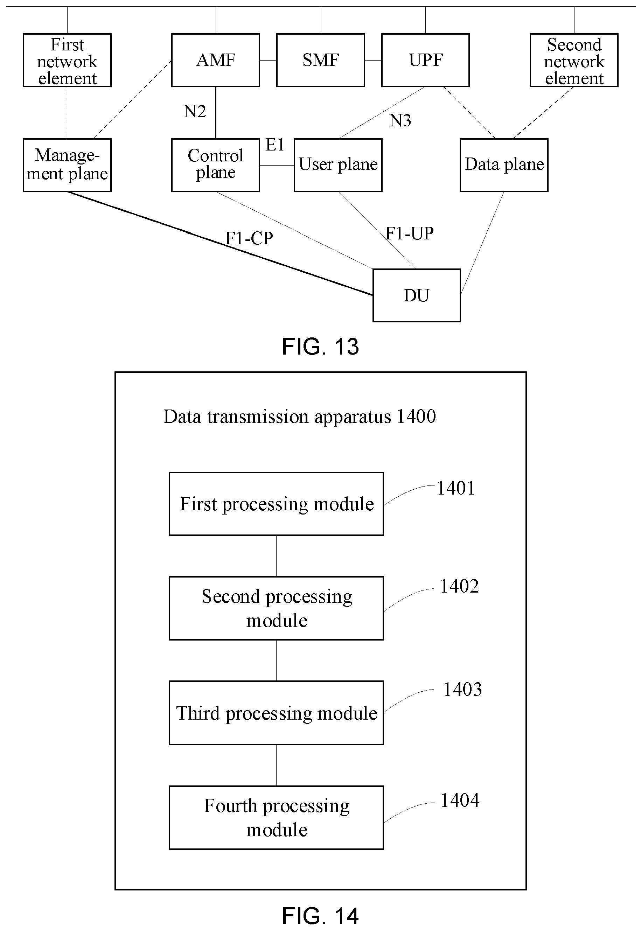

For example, as shown in FIG. 13, the access network includes a data plane, a user plane, a control plane, and a management plane.

The data plane is used for transmitting the data unrelated to the terminal devices or transmitting the network-level data.

The user plane is used for transmitting the data related to the terminal devices.

The control plane is used for transmitting the control information and/or data related to the terminal devices. The management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices.

The user plane is connected to the UPF. The control plane is connected to the AMF. The management plane is connected to the AMF and/or a first network element. The data plane is connected to the UPF and/or a second network element. The first network element and the second network element are core network elements in the future communication systems. The future communication systems include 6G and beyond communication systems. The first network element and the second network element may be network elements related to the network-level data and/or tasks, such as network elements related to AI, network elements related to computing power, network elements related to sensing, and network elements related to network data collection or management. The first network element and the second network element may be the same, or may be different.

In the above embodiments, an interface between the control plane and the core network may be a dedicated interface (similar to a 5G control plane interface) or a service-oriented interface. An interface between the user plane and the core network may also be a dedicated interface (similar to a 5G control plane interface) or a service-oriented interface. Alternatively, some planes (subplanes) may use dedicated interfaces, and some planes (subplanes) may use service-oriented interfaces. For example, planes (subplanes) related to terminal devices use dedicated interfaces (similar to the 5G control plane interface), and planes (subplanes) unrelated to the terminal devices use service-oriented interfaces. This manner is applicable to both the user plane and the control plane.

The embodiments of the present disclosure do not limit the application scenarios. The network architecture and business scenarios described in the embodiments of the present disclosure are intended to more clearly illustrate the technical solutions of the embodiments of the present disclosure, and do not constitute a limitation on the technical solutions provided in the embodiments of the present disclosure. A person of ordinary skill in the art will know, with the evolution of network architecture and the emergence of new business scenarios, the technical solutions provided in the embodiments of the present disclosure are also applicable to similar technical problems.

The embodiments of the present disclosure further provide a data transmission method, applied to the access network provided in any of the above embodiments. The method includes the following steps: transmitting, by the access network, data/control information related to network-level nodes with core network elements; and transmitting, by the access network, the data/control information related to the network-level nodes with the network-level nodes.

The network-level nodes include base stations, relays, TRPs, DUs, CUs, CU-CPs, CU-UPs, and further include the control subplanes, user subplanes, management plane, and data plane involved in the above embodiments. The core network elements include AMF, SMF, UDF and other core network elements related to the access network, and network elements related to network-level data or tasks in future communication systems (the future communication systems including 6G and beyond communication systems), such as network elements related to AI, network elements related to computing power, network elements related to sensing, and network elements related to network data collection or management.

In some embodiments, the data/control information related to the network-level nodes includes some data/control information in sensing that does not require the participation of terminal devices, such as some data/control information for single-node sensing or multi-node sensing, etc. that does not require the participation of terminal devices.

In some embodiments, the data/control information related to the network-level nodes includes some data/control information generated in artificial intelligence that does not require the participation of terminal devices, such as some data/control information generated in base station standalone AI, core network and base station collaborative AI, etc. that does not require the participation of terminal devices.

In some embodiments, the data/control information related to the network-level nodes includes some data/control information generated in computing power that does not require the participation of terminal devices, such as some data/control information generated in mobile edge computing that does not require the participation of terminal devices, and some data/control information generated in wireless communication network computing that does not require the participation of terminal devices.

The embodiments of the present disclosure provide another data transmission method, applied to the network architecture provided in any of the above embodiments. The method includes the following steps: transmitting, by the access network, data/control information related to terminal devices with core network elements; and transmitting, by the access network, the data/control information related to the terminal devices with the terminal devices.

The core network elements include AMF, SMF, UDF and other core network elements related to the access network, and network elements related to network-level data or tasks in future communication systems (the future communication systems including 6G and beyond communication systems), such as network elements related to AI, network elements related to computing power, network elements related to sensing, and network elements related to network data collection or management.

In some embodiments, the data/control information related to the terminal devices includes data/control information generated in terminal device sensing, terminal device and base station collaborative sensing, etc. that require the participation of the terminal devices, such as terminal device sensing and joint sensing by the terminal device and the base station.

In some embodiments, the data/control information related to the terminal devices includes data/control information generated in terminal device standalone AI, terminal device and base station collaborative AI, etc. that require the participation of the terminal devices.

Based on this, the access network can transmit data/control information related to network-level nodes or terminal devices with core network elements, and can also transmit data/control information related to network-level nodes with the network-level nodes or the terminal devices. This access network enables efficient coexistence of services that are unrelated to and related to terminal devices, and also facilitates better adaptation to the future communication systems.

The above mainly introduces the solutions provided in the embodiments of present disclosure from the perspective of the method. A data transmission apparatus is further illustrated below. The data transmission apparatus is configured to perform the data transmission method in any one of the above embodiments and implementation manners thereof.

It can be understood that, in order to implement the data transmission method, the data transmission apparatus includes corresponding hardware structures and/or software modules for implementing various functions. Those skilled in the art should easily realize that, the present disclosure may be implemented in the form of hardware or a combination of hardware and computer software with reference to exemplary algorithm steps described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The data transmission apparatus may be divided into functional modules according to the above-mentioned method embodiments in the embodiments of the present disclosure. For example, each function may correspond to a separate functional module, or two or more functions may be integrated into a single functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 14 shows a data transmission apparatus provided in the embodiments of the present disclosure. The data transmission apparatus is applied to an access network. The data transmission apparatus 1400 includes: a first processing module 1401, a second processing module 1402, a third processing module 1403, and a fourth processing module 1404.

In some embodiments, the first processing module 1401 is configured to transmit data/control information related to network-level nodes with core network elements. The second processing module 1402 is configured to transmit the data/control information related to the network-level nodes with network-level nodes.

In some embodiments, the third processing module 1403 is configured to transmit data/control information related to terminal devices with core network elements. The fourth processing module 1404 is configured to transmit the data/control information related to the terminal devices with the terminal devices.

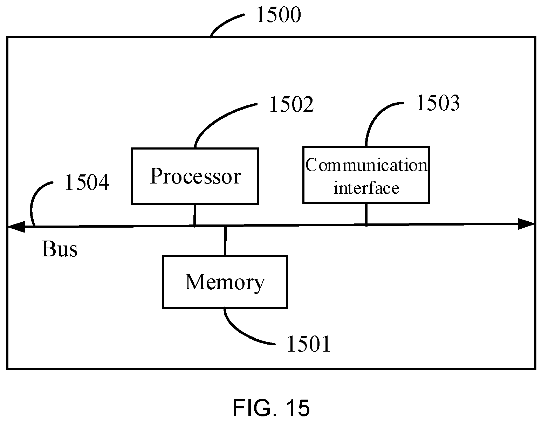

In a case where the functions of the above integrated modules are implemented in the form of hardware, the embodiments of the present disclosure further provide a possible structure of a communication apparatus, and the communication apparatus is configured to perform the data transmission method provided in the embodiments of the present disclosure. As shown in FIG. 15, the communication apparatus 1500 includes a communication interface 1503, a processor 1502, and a bus 1504. In some embodiments, the communication apparatus may further include a memory 1501.

The processor 1502 may implement or perform various exemplary logical blocks, modules and circuits described with reference to the embodiments of the present disclosure. The processor 1502may be a central processor, a general-purpose processor, a digital signal processor, an application specific integrated circuit, a field programmable gate array or other programmable logic components, a transistor logic component, a hardware assembly, or any combination thereof; and it may implement or perform various exemplary logical blocks, modules and circuits described with reference to the embodiments of the present disclosure. The processor 1502 may also be a combination that implements computing functions, for example, including a combination of one or more microprocessors, a combination of a digital signal processor (DSP) and a microprocessor, or the like.

The communication interface 1503 is configured to connect with other devices via a communication network. The communication network may be Ethernet, a wireless access network, a wireless local area network (WLAN), or the like.

The memory 1501 may be a read-only memory (ROM) or a static storage device of any other type capable of storing static information and instructions, a random access memory (RAM) or a dynamic storage device of any other type capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

As a possible implementation manner, the memory 1501 may be independent of the processor 1502, and the memory 1501 may be connected to the processor 1502 through the bus 1504, and is configured to store instructions or program codes. When the processor 1502 calls and executes the instructions or program codes stored in the memory 1501, the processor 52 can implement the data transmission method provided in the embodiments of the present disclosure.

In another possible implementation manner, the memory 1501 may be integrated with the processor 1502.

The bus 1504 may be an extended industry standard architecture (EISA) bus, or the like. The bus 1504 may be classified as an address bus, a data bus, a control bus, or the like. For ease of representation, only one bold line is used in FIG. 15 for representing the bus, but it does not mean that there is only one bus or one type of bus.

Some embodiments of the present disclosure provide a computer-readable storage medium (for example, a non-transitory computer-readable storage medium). The computer-readable storage medium has stored computer program instructions thereon, and the computer program instructions, when executed by a computer, cause the computer to perform the data transmission method as described in any one of the above embodiments.

In an exemplary implementation manner, the computer may be the above-mentioned communication apparatus, and the present disclosure does not limit the specific form of the computer.

In some examples, the computer-readable storage medium may include, but is not limited to: a magnetic storage device (e.g., a hard disk, a floppy disk or a magnetic tape), an optical disk (e.g., a compact disk (CD) or a digital versatile disk (DVD)), a smart card and a flash memory (e.g., an erasable programmable read-only memory (EPROM), a card, a stick or a key driver). The various computer-readable storage media described in the present disclosure may represent one or more devices and/or other machine-readable storage media for storing information. The term "machine-readable storage medium" includes, but is not limited to, a wireless channel and various other media capable of storing, containing, and/or carrying instructions and/or data.

The embodiments of the present disclosure provide a computer program product including instructions. The computer program product, when executed by a computer, causes the computer to perform the data transmission method as described in any one of the above embodiments.

The foregoing descriptions are merely specific implements of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. An access network, wherein the access network comprises at least a control plane and a user plane; the control plane is used for at least one of: managing network-level functions, managing network-level data, managing network-level tasks, transmitting control information related to the network-level tasks, transmitting control information related to the network-level data, transmitting the network-level data, transmitting control information and/or data related to terminal devices, transmitting data unrelated to the terminal devices, transmitting control information for the data unrelated to the terminal devices, or transmitting control information for tasks unrelated to the terminal devices; and the user plane is used for at least one of: transmitting the data related to the terminal devices, transmitting the data unrelated to the terminal devices, or transmitting the network-level data.

2. The access network according to claim 1, wherein the control plane comprises a plurality of control subplanes, and/or the user plane comprises a plurality of user subplanes.

3. The access network according to claim 2, wherein the control plane comprises a first control subplane and a second control subplane; the first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices; and the second control subplane is used for at least transmitting the control information and/or data related to the terminal devices.

4. The access network according to claim 3, wherein the first control subplane is connected to an access and mobility management function (AMF) and/or a first network element; the second control subplane is connected to the AMF; and the first network element is a core network element in future communication systems.

5. The access network according to claim 2, wherein the user plane comprises a first user subplane and a second user subplane; the first user subplane is used for at least transmitting the data unrelated to the terminal devices or transmitting the network-level data; and the second user subplane is used for at least transmitting the data related to the terminal devices.

6. The access network according to claim 5, wherein the first user subplane is connected to a user plane function (UPF) and/or a second network element; the second user subplane is connected to the UPF; and the second network element is a core network element in future communication systems.

7. The access network according to claim 1, wherein the control plane comprises a plurality of control subplanes, and the user plane is used for transmitting the data related to the terminal devices.

8. The access network according to claim 2 or 7, wherein the control plane comprises at least one of a first control subplane, a second control subplane, or a third control subplane; the first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices; the second control subplane is used for transmitting the data unrelated to the terminal devices or transmitting the network-level data; and the third control subplane is used for at least transmitting the control information and/or data related to the terminal devices.

9. The access network according to claim 8, wherein the user plane is connected to a UPF; the first control subplane is connected to an AMF and/or a first network element; the second control subplane is connected to the UPF and/or a second network element; the third control subplane is connected to the AMF; and the first network element and the second network element are core network elements in future communication systems.

10. The access network according to claim 2 or 7, wherein the control plane comprises a first control subplane and a second control subplane; the first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices, and is used for transmitting the data unrelated to the terminal devices or transmitting the network-level data; and the second control subplane is used for transmitting the control information and/or data related to the terminal devices.

11. The access network according to claim 10, wherein the user plane is connected to a UPF; the first control subplane is connected to at least one network element among an AMF, a first network element, and the UPF; the second control subplane is connected to the AMF; and the first network element is a core network element in future communication systems.

12. The access network according to claim 2 or 7, wherein the control plane comprises a first control subplane and a second control subplane; the first control subplane is used for transmitting the control information and/or data related to the terminal devices, and is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, or transmitting the control information and/or data related to the terminal devices; and the second control subplane is used for transmitting the data unrelated to the terminal devices or transmitting the network-level data.

13. The access network according to claim 12, wherein the user plane is connected to a UPF; the first control subplane is connected to an AMF and/or a first network element; the second control subplane is connected to at least one network element among a second network element, the UPF, and the AMF; and the first network element and the second network element are core network elements in future communication systems.

14. The access network according to claim 2 or 7, wherein the control plane comprises a first control subplane and a second control subplane; the first control subplane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices; and the second control subplane is used for transmitting the control information and/or data related to the terminal devices, and is used for transmitting the data unrelated to the terminal devices or transmitting the network-level data.

15. The access network according to claim 14, wherein the user plane is connected to a UPF; the first control subplane is connected to a first network element and/or an AMF; the second control subplane is connected to a second network element and/or the AMF; and the first network element and the second network element are core network elements in future communication systems.

16. The access network according to claim 1, wherein the user plane comprises a plurality of user subplanes; and the control plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, or transmitting the control information and/or data related to the terminal devices.

17. The access network according to claim 16, wherein the user plane comprises a first user subplane and a second user subplane; the first user subplane is used for transmitting the data unrelated to the terminal devices or transmitting the network-level data; and the second user subplane is used for transmitting the data related to the terminal devices.

18. The access network according to claim 17, wherein the control plane is connected to a first network element and/or an AMF; the first user subplane is connected to a UPF and/or a second network element; the second user subplane is connected to the UPF; and the first network element and the second network element are core network elements in future communication systems.

19. The access network according to claim 1, wherein the access network further comprises a management plane, the management plane being used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, transmitting the data unrelated to the terminal devices, or transmitting the network-level data.

20. The access network according to claim 19, wherein the management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, transmitting the control information for the tasks unrelated to the terminal devices, transmitting the data unrelated to the terminal devices, or transmitting the network-level data; the user plane is used for transmitting the data related to the terminal devices; and the control plane is used for transmitting the control information and/or data related to the terminal devices.

21. The access network according to claim 20, wherein the user plane is connected to a UPF; the control plane is connected to an AMF; the management plane is connected to at least one network element among the AMF, a first network element, and the UPF; and the first network element is a core network element in future communication systems.

22. The access network according to claim 19, wherein the management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices; the user plane is used for transmitting the data related to the terminal devices, and is used for transmitting the data unrelated to the terminal devices or transmitting the network-level data; and the control plane is used for transmitting the control information and/or data related to the terminal devices.

23. The access network according to claim 22, wherein the user plane is connected to a UPF and/or a first network element; the control plane is connected to an AMF; the management plane is connected to at least one network element among the AMF, a second network element, and the UPF; and the first network element and the second network element are core network elements in future communication systems.

24. The access network according to claim 19, wherein the management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices; the user plane is used for transmitting the data related to the terminal devices; and the control plane is used for transmitting the control information and/or data related to the terminal devices, and is used for transmitting the data unrelated to the terminal devices or transmitting the network-level data.

25. The access network according to claim 24, wherein the control plane comprises a first control subplane and a second control subplane; the first control subplane is used for transmitting the control information and/or data related to the terminal devices; and the second control subplane is used for transmitting the data unrelated to the terminal devices or transmitting the network-level data.

26. The access network according to claim 24, wherein the user plane is connected to a UPF; the control plane is connected to an AMF and/or a first network element; and the management plane is connected to at least one network element among the AMF, a second network element, and the UPF; and the first network element and the second network element are core network elements in future communication systems.

27. The access network according to claim 1 or 19, wherein the access network further comprises a data plane; the data plane is used for transmitting the data unrelated to the terminal devices or for transmitting the network-level data; the user plane is used for transmitting the data related to the terminal devices; the control plane is used for transmitting the control information and/or data related to the terminal devices; the management plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices.

28. The access network according to claim 27, wherein the user plane is connected to a UPF; the control plane is connected to an AMF; the management plane is connected to the AMF and/or a first network element; the data plane is connected to the UPF and/or a second network element; and the first network element and the second network element are core network elements in future communication systems.

29. The access network according to claim 1, wherein the access network further comprises a data plane, the data plane being used for transmitting the data unrelated to the terminal devices or transmitting the network-level data; the user plane is used for transmitting the data related to the terminal devices; and the control plane is used for at least one of: managing the network-level functions, managing the network-level data, managing the network-level tasks, transmitting the control information related to the network-level tasks, transmitting the control information related to the network-level data, transmitting the control information for the data unrelated to the terminal devices, or transmitting the control information for the tasks unrelated to the terminal devices, and is used for transmitting the control information and/or data related to the terminal devices.

30. The access network according to claim 29, wherein the user plane is connected to a UPF; the control plane is connected to an AMF and/or a first network element; the data plane is connected to at least one network element among the AMF, a second network element, and the UPF; and the first network element and the second network element are core network elements in future communication systems.

31. The access network according to claim 1, wherein the access network further comprises a management plane, the management plane being used for at least one of: managing the network-level functions, managing the network-level data, managing the network-level tasks, transmitting the control information related to the network-level tasks, transmitting the control information related to the network-level data, transmitting the network-level data, transmitting the control information and/or data related to the terminal devices, transmitting the data unrelated to the terminal devices, transmitting the control information for the data unrelated to the terminal devices, or transmitting the control information for the tasks unrelated to the terminal devices; the user plane is used for transmitting the data related to the terminal devices; and the control plane is used for transmitting the control information and/or data related to the terminal devices.

32. The access network according to claim 31, wherein the management plane comprises a first management subplane and a second management subplane; the first management subplane is used for managing the network-level functions, managing the network-level data, managing the network-level tasks, transmitting the control information related to the network-level tasks, transmitting the control information related to the network-level data, transmitting the network-level data, transmitting the data unrelated to the terminal devices, transmitting the control information for the data unrelated to the terminal devices, and transmitting the control information for the tasks unrelated to the terminal devices; and the second management subplane is used for transmitting the control information and/or data related to the terminal devices.

33. The access network according to claim 1, wherein the access network further comprises a management plane, the management plane being used for at least one of: transmitting control information for intelligent tasks, transmitting data for intelligent tasks, transmitting control information for sensing tasks, transmitting data for sensing tasks, transmitting control information for computing power tasks, transmitting data for computing power tasks, transmitting control information for positioning tasks, or transmitting data for positioning tasks; the user plane is used for transmitting the data related to the terminal devices; and the control plane is used for transmitting the control information related to the terminal devices.

34. The access network according to claim 31, wherein the management plane comprises a first management subplane and a second management subplane; the first management subplane is used for: transmitting tasks related to the terminal devices, comprising at least one of: transmitting control information for intelligent tasks related to the terminal devices, transmitting data for the intelligent tasks related to the terminal devices, transmitting control information for sensing tasks related to the terminal devices, transmitting data for the sensing tasks related to the terminal devices, transmitting control information for computing power tasks related to the terminal devices, transmitting data for the computing power tasks related to the terminal devices, transmitting control information for positioning tasks related to the terminal devices, or transmitting data for the positioning tasks related to the terminal devices; the second management subplane is used for: transmitting network-level related tasks, comprising at least one of: transmitting control information for network-level intelligent tasks, transmitting data for the network-level intelligent tasks, transmitting control information for network-level sensing tasks, transmitting data for the network-level sensing tasks, transmitting control information for network-level computing power tasks, or transmitting data for the network-level computing power tasks.

35. The access network according to claim 31 or 33, wherein the user plane is connected to a UPF; the control plane is connected to an AMF; the management plane is connected to at least one network element among the AMF, a second network element, and the UPF; and a first network element and the second network element are core network elements in future communication systems.

36. A data transmission method, applied to the access network according to any one of claims 1 to 35, the method comprising:
transmitting data/control information related to network-level nodes with core network elements; and
transmitting the data/control information related to the network-level nodes with the network-level nodes.

37. The method according to claim 36, further comprising:
transmitting data/control information related to terminal devices with the core network elements; and
transmitting the data/control information related to the terminal devices with the terminal devices.

38. A communication apparatus, comprising a memory and a processor, wherein the memory is coupled to the processor, the memory is configured to store instructions executable by the processor, and the processor, when executing the instructions, performs the method according to claim 36 or 37.

39. A computer-readable storage medium, wherein the computer-readable storage medium has stored computer instructions thereon, and the computer instructions, when executed by a communication apparatus, cause the communication apparatus to perform the method according to claim 36 or 37.
